# DEMANDE DE BREVET EUROPEEN

(11) **EP 4 478 246 A1**
(43) Date de publication de la demande: **18.12.2024**
(21) Numéro de dépôt: 24169452.0
(22) Date de dépôt: 10.04.2024
(51) Int. Cl.: G06K 19/02, G06K 19/077, H01Q 1/22

(54) **CARTE À PUCE AVEC ANTENNES RADIOFRÉQUENCES**

(30) Priorité: 15.06.2023 FR 2306098
(71) Demandeur: IDEMIA France, 92400 Courbevoie (FR)
(72) Inventeur: ALI, Ahmed, 92400 COURBEVOIE (FR)
(74) Mandataire: Idemia

(57) **Abrégé**

L'invention vise une carte à puce (CD1) comprenant un corps de carte (6) comprenant une couche métallique (8), une puce RF (4), une première antenne RF (ANT1) disposée dans une zone d'évidement (14) et connectée à la puce. La couche métallique comporte une deux régions (R1, R2), la première région (R1) contenant entièrement la zone d'évidement (14).

Une première fente (F1) connecte la zone d'évidement (14) à un bord de la première région (R1), une deuxième fente (F2) débouche sur un bord de la couche (8) ou dans la zone d'évidement (14) et se termine dans la deuxième région (R2).

Deux autres antennes RF (ANT2, ANT3) permettent un couplage avec la première antenne (ANT1). Elles comportent respectivement au moins une spire en regard de la première fente (F1) et au moins spire en regard de la deuxième fente (F2).

## Description

### Domaine Technique

L'invention se rapporte au domaine des cartes à puce et porte plus particulièrement sur les cartes à puce métalliques aptes à fonctionner en mode sans contact.

### Technique antérieure

L'utilisation des cartes à puce (ou cartes à microcircuit) est aujourd'hui largement répandue dans la vie quotidienne. De telles cartes sont par exemple utilisées comme cartes bancaires, cartes de fidélité, cartes d'accès etc., et peuvent prendre divers formats selon leurs utilisations respectives. Les cartes à puce peuvent être conçues pour réaliser divers types de fonctions, notamment pour effectuer des transactions, telles que des transactions bancaires (transaction de paiement, de transfert...), des transactions d'authentification, etc.

De façon connue, une carte à puce comprend généralement un corps de carte qui est équipé d'une puce électronique configurée pour échanger des signaux avec l'extérieur et réaliser diverses fonctions selon l'utilisation souhaitée de la carte. Pour ce faire, les cartes à puce sont munies de moyens de communication permettant d'interagir avec l'extérieur, typiquement avec un lecteur NFC ou lecteur externe.

Traditionnellement, une carte à puce est conçue pour coopérer avec un lecteur externe au moyen de contacts externes accessibles à la surface de la carte. Un lecteur externe peut ainsi positionner des broches de contact appropriées sur les contacts externes de la carte afin d'établir une communication par contact.

Plus récemment, les cartes à puce sans contact ont connu un essor croissant en raison du gain en rapidité et en simplicité liées aux transactions sans contact. Pour ce faire, les cartes sans contact embarquent une antenne radiofréquence (RF) permettant l'échange de signaux RF avec un lecteur NFC externe (par exemple en champ proche NFC pour « Near Field Communication » en anglais). Cette antenne RF est généralement composée d'une pluralité de spires conductrices qui s'étendent dans le corps de la carte.

La structure et l'apparence des cartes à puce peuvent varier selon le cas. Les cartes à puce métalliques connaissent en particulier un intérêt croissant en raison notamment de l'aspect esthétique attractif de ces cartes (reflets métalliques, effet brossé en surface etc.), de l'impression de qualité qu'elles peuvent procurer (poids appréciable du métal, esthétique haute gamme), ou encore de la connotation de prestige qui y est associée pour leurs utilisateurs. En raison notamment de leur poids important et de l'impression de haute qualité qu'elles dégagent, ces cartes sont privilégiées par certains utilisateurs pour servir de marqueur social et d'élément différenciant.

Il a cependant été observé que la présence de métal dans le corps d'une carte à puce pose des difficultés majeures lorsque la carte embarque une antenne RF pour fonctionner en mode sans contact. Le métal agit comme blindage électromagnétique et bloque ou gêne les signaux RF échangés par l'antenne RF avec l'extérieur. Le métal présent dans le corps de carte peut ainsi perturber les communications sans contact d'une carte à puce avec un lecteur NFC externe et gêner par exemple la réalisation d'une transaction sans contact (de paiement ou autre).

Le problème se pose en particulier lorsque la carte est déplacée dans le plan hors du centre du lecteur NFC. Ceci est très courant dans l'environnement RFID HF NFC, par exemple lors d'un paiement lorsque l'utilisateur approche sa carte de manière décentrée par rapport au lecteur du point de vente.

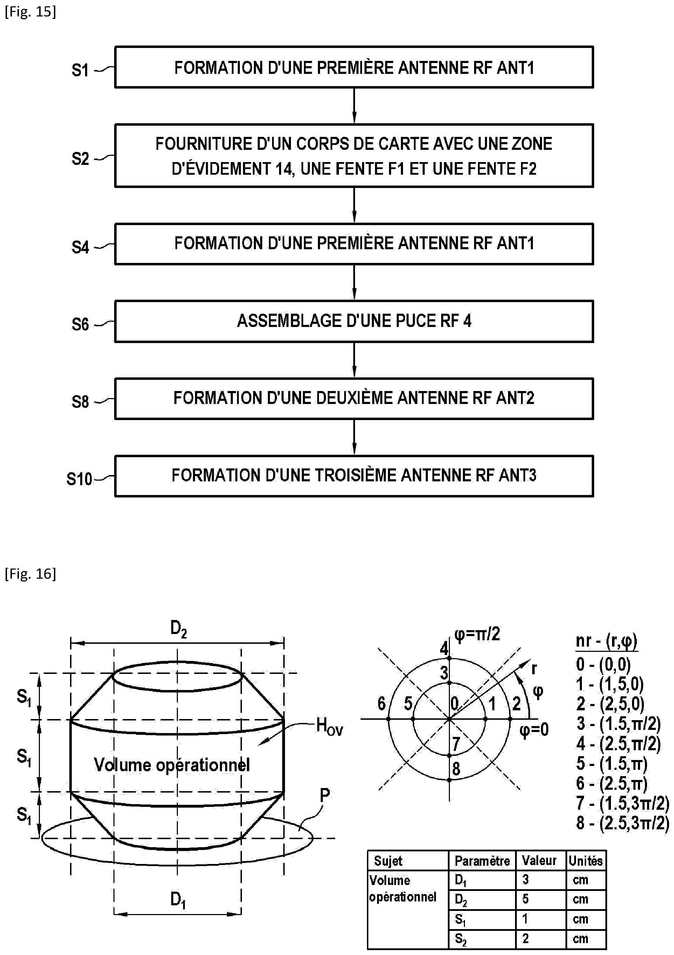

La **figure 16** illustre par exemple un volume opérationnel dans l'ensemble duquel la carte doit être opérationnelle pour être conforme à une norme définie par un organisme international EMVCO. L'homme du métier peut se reporter au document « EMV Contactless Spécifications for Payment Systems, Book D: EMV Contactless Communication Protocol Spécification. Version 2.6, March 2016. ». L'un des objectifs d'EMVCo est de garantir l'interopérabilité et la compatibilité des cartes à puce et des lecteurs de ces cartes dans des conditions opérationnelles déterminées.

Ce volume opérationnel est défini par des dimensions S₁, S₂, D₁, D₂ rappelées sur la figure 16.

Cette figure représente également la projection de 9 points de de volume sur un plan. Par exemple, le point 6 illustre une situation dans laquelle le centre de la carte est décalé de 25 mm par rapport au centre du lecteur NFC.

Dans l'état actuel de la technique, les cartes à puce métallique ne fonctionnent pas de manière satisfaisante dans l'ensemble du volume opérationnel EMVCo, notamment pour les positions de la carte correspondant au point 6.

Il existe donc un besoin pour des cartes à puce métalliques performantes (de type RFID par exemple) et de fabrication simple, capables de coopérer efficacement en sans contact avec un lecteur NFC externe, et ce quelle que soit la position de la carte par rapport à un lecteur NFC externe, dans des conditions opérationnelles déterminées.

### Exposé de l'invention

A cet effet, la présente invention concerne une carte à puce comprenant une carte à puce comprenant un corps de carte de forme générale rectangulaire formé au moins en partie par une couche métallique comprenant une zone d'évidement ;
- une puce RF ;
- une première antenne RF disposée dans ou en regard de la zone d'évidement, ladite première antenne RF étant connectée électriquement à la puce RF ;
   ladite couche métallique étant constituée par une première région et une deuxième région entièrement délimitées par une droite parallèle à un petit côté de la carte, la première région contenant entièrement la zone d'évidement et sa surface étant plus petite que celle de la deuxième région ,
- une première fente connectant la zone d'évidement à un bord périphérique de la première région ;
- une deuxième fente débouchant soit sur un bord périphérique de la couche métallique soit dans la zone d'évidement, la deuxième fente se terminant par une partie fermée dans la deuxième région;
- une deuxième antenne RF isolée électriquement de la couche métallique et de la première antenne RF et configurée pour permettre un couplage avec la première antenne, la deuxième antenne comportant au moins une spire en regard de la première fente ;
- une troisième antenne RF isolée électriquement de la couche métallique, de la première antenne RF et de la deuxième antenne RF et configurée pour permettre un couplage avec la première antenne, la troisième antenne comportant au moins une spire en regard de la deuxième fente.

L'invention offre ainsi une carte à puce métallique performantes (de type RFID par exemple) et de fabrication simple, capable de coopérer efficacement en sans contact avec un lecteur NFC externe, et ce quelle que soit la position et l'orientation de la carte vis-à-vis du lecteur NFC externe.

De façon très avantageuse, la couche métallique comporte donc au moins deux fentes, une première fente étant située dans la première région, la deuxième fente étant située dans la deuxième région.

Préférentiellement, la première fente débouche sur un petit côté de la carte à puce, au plus près de la zone d'évidement.

Préférentiellement, la deuxième fente métallique débouche dans la cavité et se termine dans une zone de la carte située entre la cavité et le centre de la carte à puce.

Chacune de ces fentes permet au champ magnétique généré par un lecteur de la carte de passer à travers la couche métallique, ce qui génère un courant induit dans les spires de la deuxième antenne situées en regard de la première fente et un courant induit dans les spires de la troisième antenne situées en regard de la deuxième fente.

Cette configuration permet également aux spires de la deuxième antenne situées en regard de la première fente et aux spires de la troisième antenne situées en regard de la deuxième fente, de collecter un courant image induit par un courant circulant sur la couche métallique localement au niveau de ces fentes en raison du champ magnétique généré par le lecteur de la carte à puce.

Comme détaillé ci-après, du fait de la continuité des courants de Foucault, les deux courants collectés par ces spires de la deuxième antenne, à savoir celui induit directement par le champ électromagnétique traversant la première fente et celui image d'un courant de Foucault local circulant sur la couche métallique se cumulent en phase.

De même, les deux courants collectés par ces spires de la troisième antenne, à savoir celui induit directement par le champ électromagnétique traversant la deuxième fente et celui image d'un courant de Foucault local circulant sur la couche métallique se cumulent en phase.

Cette configuration permet un couplage efficace entre les deux antennes, quelle que soient les conditions opérationnelles de la carte.

Dans un mode de réalisation, la deuxième antenne RF comprend :
- une première partie d'antenne s'étendant en regard d'une zone périphérique de la couche métallique, au moins une spire de ladite première partie d'antenne s'étendant en regard de la première fente,
- une deuxième partie d'antenne, connectée électriquement à la première partie de la deuxième antenne , et s'étendant en regard de la zone d'évidement pour permettre un couplage avec la première antenne ;
la première partie de la deuxième antenne étant configurée pour collecter un courant image induit par des premiers courants de Foucault circulant sur un bord dans la couche métallique lorsque la carte à puce est soumise à un champ électromagnétique dans des conditions opérationnelles de la carte à puce.

La troisième antenne RF comprend :
- une première partie d'antenne agencée au moins en partie en regard de la deuxième région de la couche métallique, au moins une spire de ladite première partie d'antenne s'étendant en regard de la deuxième fente,
- une deuxième partie d'antenne connectée électriquement à la première partie de la troisième d'antenne, et s'étendant en regard de la zone d'évidement pour permettre un couplage avec la première antenne ;
la première partie de la troisième antenne étant configurée pour collecter un courant image induit par des courants de Foucault circulant dans la deuxième région de la couche métallique lorsque la carte à puce est soumise à un champ électromagnétique dans des conditions opérationnelles dites défavorables correspondant à une partie seulement desdites conditions opérationnelles.

L'acheminement des deuxième et troisième antennes est configuré de manière à ce que le flux de courant circule dans la même direction dans :
- la première partie de la deuxième antenne ;
- la deuxième partie de la deuxième antenne ;
- la première partie de la troisième antenne ; et dans
- la deuxième partie de la troisième antenne.

En particulier, lorsque la zone d'évidement (ou cavité) est relativement éloignée du champ d'intensité maximale, les conditions opérationnelles peuvent être défavorables.

La première partie de la deuxième antenne est agencée en regard d'une zone périphérique de la couche métallique, préférentiellement selon un routage sensiblement rectangulaire qui suit le contour le long des quatre côtés de la carte à puce, notamment dans la première région de la carte au voisinage de la zone d'évidement.

Normalement, quelles que soient les conditions opérationnelles de la carte, le champ magnétique du lecteur de carte génère une boucle d'un courant de Foucault qui circule le long du bord de la carte et qui induit un courant image apte à être collecté par cette première partie de la deuxième antenne.

La première partie de la deuxième antenne permet avantageusement de récupérer l'énergie d'une boucle principale des courants de Foucault circulant le long du bord périphérique de la couche métallique lorsque toute la surface de la carte est exposée à un champ magnétique uniforme généré par l'antenne d'un lecteur de ladite carte, notamment lorsque est centrée par rapport à l'antenne du lecteur de carte à puce.

La première partie de la troisième antenne permet quant à elle de récupérer efficacement l'énergie des courants de Foucault circulant sur la carte à puce lorsque la carte à puce est utilisée dans des conditions moins favorables, la carte étant décentrée par rapport à l'antenne du lecteur de carte.

En effet, lorsque la carte est décentrée par rapport à l'antenne du lecteur de sorte que la zone d'évidement et la première antenne s'éloignent du centre de l'antenne du lecteur, la boucle principale du courant de Foucault se retrouve principalement cantonnée dans la deuxième région de la couche métallique, alors en vis-à-vis du champ magnétique d'intensité maximale.

Dans un mode de réalisation, la deuxième région comporte une zone privilégiée d'exploitation des courants de Foucault, une ou plusieurs spires de la troisième antenne étant situées en vis-à-vis de la deuxième fente au niveau de cette zone privilégiée.

Dans un mode de réalisation, la zone privilégiée d'exploitation des courants de Foucault est un disque centré sur ladite carte et dont le rayon correspond au rayon d'un volume opérationnel de ladite carte.

Ce mode de réalisation permet de garantir que quelles que soient les conditions d'opération de la carte à puce, la deuxième fente de couche métallique se trouve elle-même dans cette zone opérationnelle et qu'une boucle principale du courant de Foucault circule sur le bord de cette fente.

Dans un mode de réalisation, la carte à puce est conforme à la norme EMVCo, la zone d'exploitation des courants de Foucault est un disque de 25mm de rayon centré sur ladite carte.

Lorsque la carte à puce est soumis à un champ magnétique, l'action combinée :
(i) du courant image acheminé depuis la première partie de le deuxième antenne et/ou la première partie de la troisième antenne d'une part, et
(i) d'un courant induit dans la deuxième partie de la deuxième antenne et/ou dans la deuxième partie de la troisième antenne par le champ magnétique reçu à travers la couche métallique d'autre part,
permet de maximiser la quantité d'énergie collectée dans la deuxième antenne RF et/ou dans la troisième antenne RF à partir du champ magnétique, et donc de garantir un couplage magnétique performant entre la première antenne RF et la deuxième et/ou troisième antenne RF, ce qui permet de délivrer un maximum d'énergie à la puce RF reliée à la première antenne RF.

En fonctionnement, sous l'effet du champ magnétique auquel est soumise la carte à puce, la puce RF est ainsi capable d'utiliser la deuxième et/ou la troisième antenne RF couplée avec la première antenne RF pour communiquer avec un lecteur NFC externe (en particulier pour échanger des signaux RF en transmission et/ou réception avec le lecteur NFC). Lorsqu'un utilisateur présente la carte à puce du lecteur NFC, dans des conditions opérationnelles déterminées, une communication sans contact peut ainsi être établie entre le lecteur NFC et la carte à puce, et ce quelle que soit l'orientation de cette dernière vis-à-vis du lecteur NFC. En effet, des courants de Foucault sont générés dans la couche métallique quelle que soit l'orientation de la carte à puce relativement au lecteur NFC. De même, quelle que soit la face de la carte à puce qui est présentée devant le lecteur NFC, la deuxième partie de la deuxième antenne et la deuxième partie de la troisième antenne sont capables de collecter une composante de courant induite par le champ magnétique au niveau de la zone d'évidemment.

Selon un mode de réalisation particulier, les deuxième et troisièmes antennes RF sont configurées de sorte que leurs deuxièmes parties s'étendent exclusivement en regard de la zone d'évidement.

Selon un mode de réalisation particulier, la première antenne RF est disposée en regard de la zone d'évidement de sorte que la zone d'évidement est intercalée entre la première antenne d'une part et les deuxième et troisième antennes RF d'autre part pour permettre un couplage magnétique entre la première antenne et les deuxième et troisième antennes.

Selon un mode de réalisation particulier, les deuxième et troisième antennes RF sont isolées électriquement de la couche métallique et de la première antenne RF par une couche isolante intercalée entre les deuxième et troisième antennes RF d'une part, et la couche métallique et la zone d'évidement d'autre part.

Selon un mode de réalisation particulier, la carte à puce comprend en outre un module électronique comportant la puce RF, ledit module électronique étant ménagé dans ou en regard de la zone d'évidement.

Selon un mode de réalisation particulier, les première et deuxième parties de la deuxième antenne RF sont connectées en parallèle avec un premier composant capacitif.

Selon un mode de réalisation particulier, les première et deuxième parties de la troisième antenne RF sont connectées en parallèle avec un deuxième composant capacitif, indépendant du premier composant capacitif.

Selon un mode de réalisation particulier, le couplage magnétique permet à la puce RF d'établir une communication sans contact avec l'extérieur de la carte à puce en utilisant la deuxième et/ou la troisième antenne RF couplée à la première antenne RF.

Dans un mode de réalisation, la couche métallique est au moins partiellement, préférentiellement entièrement recouverte par un revêtement plus conducteur que la couche métallique, par exemple en cuivre, en argent ou en or. L'épaisseur du revêtement est préférentiellement supérieure à l'épaisseur de peau dudit revêtement.

Par exemple, la conductivité du revêtement est supérieure à 3,5x107 S/m.

L'invention vise également un procédé de fabrication d'une carte à puce de forme générale rectangulaire à partir d'un corps de carte formé au moins en partie par une couche métallique, ladite couche métallique comprenant une zone d'évidement, la couche métallique étant constituée par une première région et une deuxième région entièrement délimitées par une droite parallèle à un petit côté de la carte, la première région contenant entièrement la zone d'évidement et sa surface étant plus petite que celle de la deuxième région, une première fente de la couche métallique connectant la zone d'évidement à un bord périphérique de la couche métallique de la première région et une deuxième fente de la couche métallique débouchant soit sur un bord périphérique de la couche métallique soit dans la zone d'évidement, la deuxième fente se terminant par une partie fermée dans la deuxième région, le procédé comprenant :
- formation sur ou dans le corps de carte d'une première antenne RF dans ou en regard de la zone d'évidement de la couche métallique ;
- assemblage d'une puce RF avec le corps de carte de sorte que la puce RF est connectée électriquement à la première antenne RF ; et
- formation sur ou dans le corps de carte d'une deuxième antenne RF de sorte que la deuxième antenne RF est isolée électriquement de la couche métallique et de la première antenne RF, la deuxième antenne étant configurée pour permettre un couplage avec la première antenne, la deuxième antenne comportant au moins une spire située en regard de la première fente ;
- formation sur ou dans le corps de carte d'une troisième antenne RF de sorte que la troisième antenne RF est isolée électriquement de la couche métallique, de la première antenne RF et de la deuxième antenne RF, la troisième antenne étant configurée pour permettre un couplage avec la première antenne, la troisième antenne comportant au moins une spire située en regard de la deuxième fente.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement une carte à puce coopérant avec un lecteur NFC, selon au moins un mode particulier de réalisation de l'invention;
[Fig. 2] La figure 2 est une vue de dessus (ou dessous) d'une couche métallique d'une carte à puce selon au moins un mode particulier de réalisation de l'invention ;
[Fig. 3] La figure 3 est une vue éclatée en coupe représentant schématiquement la structure d'une carte à puce selon au moins un mode particulier de réalisation de l'invention ;
[Fig. 4] La figure 4 est une vue de détail en coupe d'une portion d'une carte à puce, selon au moins un mode particulier de réalisation de l'invention;
[Fig. 5] La figure 5 illustre une zone d'exploitabilité des courants de Foucault sur une couche métallique ;
[Fig. 6] La figure 6 représente une carte à puce centrée par rapport à la source d'un champ magnétique incident ;
[Fig. 7] La figure 7 représente une carte à puce décentrée par rapport à la source d'un champ magnétique incident ;
[Fig. 8A] La figure 8A représente un premier exemple de couche métallique pouvant être utilisée dans des modes particuliers de mise en oeuvre de l'invention ;
[Fig. 8B] La figure 8B représente un deuxième exemple de couche métallique pouvant être utilisée dans des modes particuliers de mise en oeuvre de l'invention ;
[Fig. 8C] La figure 8C représente un troisième exemple de couche métallique pouvant être utilisée dans des modes particuliers de mise en oeuvre de l'invention ;
[Fig. 8D] La figure 8D représente un quatrième exemple de couche métallique pouvant être utilisée dans des modes particuliers de mise en oeuvre de l'invention ;
[Fig. 9] La figure 9 illustre la circulation des courants de Foucault et la circulation des courants image sur la carte à puce dans un mode particulier de mise en oeuvre de l'invention ;
[Fig. 10] La figure 10 représente un exemple d'agencement d'une antenne et d'une couche métallique pouvant être mis en oeuvre dans une carte à puce conforme à un mode particulier de réalisation de l'invention ;
[Fig. 11] La figure 11 représente une carte à puce conforme à un mode particulier de l'invention ;
[Fig. 12] La figure 12 représente une carte à puce conforme à un autre mode particulier de l'invention ;
[Fig. 13] La figure 13 illustre un fonctionnement de la carte à puce de la figure 11 ;
[Fig. 14] La figure 14 représente une autre carte à puce conforme à un mode particulier de l'invention ;
[Fig. 15] La figure 15 représente sous forme d'un diagramme les étapes d'un procédé de fabrication d'une carte à puce de l'invention, selon au moins un mode de réalisation particulier ; et
[Fig. 16] La figure 16 déjà décrite représente des conditions opérationnelles d'une carte à puce définies par l'organisation internationale EMVCo.

### Description des modes de réalisation

Comme indiqué précédemment, l'invention porte sur des cartes à puce métalliques configurées pour fonctionner en mode sans contact, et concerne également la fabrication de telles cartes à puce. Une « carte à puce métallique » désigne dans le présent document une carte à puce comprenant un métal ou une combinaison (alliage) de métaux, par exemple sous la forme d'une couche métallique ou d'une pluralité de couches métalliques.

Comme indiqué précédemment, une carte à puce sans contact est configurée par nature pour communiquer en sans contact avec l'extérieur, plus particulièrement avec un lecteur NFC externe. A cet effet, une carte à puce sans contact embarque une antenne radiofréquence (RF) pour échanger (recevoir et/ou émettre) des signaux RF avec un lecteur NFC externe. Une telle carte à puce peut en outre avoir la capacité de fonctionner aussi en mode avec contact, en utilisant des contacts externes prévus à cet effet à la surface de la carte : on parle alors de cartes « dual » (ou cartes à double interface de communication), ces cartes étant ainsi capable de fonctionner en mode sans contact et en mode avec contact.

Il existe aujourd'hui une forte demande chez les utilisateurs pour des cartes à puce métalliques, pour notamment les raisons évoquées précédemment (aspects esthétiques, impression de qualité, prestige...). Il est en particulier souhaitable de produire des cartes à puce dont l'essentiel (ou une part importante) du corps de carte est en métal, ou du moins dont le corps de carte comporte une plaque métallique (ou couche métallique), afin d'obtenir une certaine uniformité et qualité dans l'aspect visuel et esthétique de la carte.

Or, lorsqu'une carte à puce sans contact comporte une couche métallique ainsi qu'une antenne RF disposée sur ou au voisinage de l'une des faces de la couche métallique, il a été observé que cette couche métallique perturbe les communications sans contact entre l'antenne RF et l'extérieur, en particulier lorsque la couche métallique est disposée entre l'antenne RF et le lecteur NFC externe avec lequel la carte à puce tente de communiquer, en raison du blindage électromagnétique induit par la couche métallique. Ainsi, selon la position et l'orientation de la carte par rapport au lecteur, il peut être possible ou non d'effectuer une transaction sans contact entre une carte à puce métallique et un lecteur NFC externe. Dans certains cas, une transaction est possible si l'on présente la carte à puce de sorte que l'antenne soit disposée du côté du lecteur NFC (sans que la couche métallique s'interpose entre les deux), mais les communications RF sont perturbées, voire impossibles, si la couche métallique forme une barrière électromagnétique entre l'antenne RF de la carte et le lecteur NFC (la plaque métallique fait office de barrière électromagnétique entre la puce RF et le lecteur NFC). Toutefois, pour que des communications RF puissent être réalisées entre une carte à puce métallique et un lecteur NFC externe, il est généralement nécessaire que la carte comprenne de la ferrite afin de limiter les perturbations électromagnétiques résultant de la partie métallique. Sans ferrite, même en orientant correctement une carte à puce métallique relativement à un lecteur NFC externe, il n'est généralement pas possible d'échanger convenablement des communications RF entre la carte et le lecteur NFC, rendant de ce fait toute transaction impossible (ou tout du moins difficile).

L'invention se propose de pallier notamment les inconvénients et problèmes mentionnés ci-avant. Pour ce faire, l'invention vise une carte à puce comprenant une couche métallique et une structure d'antenne particulière comprenant trois antennes RF, à savoir une première antenne RF connectée électriquement à une puce RF de la carte, et deux antennes RF chacune s'étendant en partie en regard de la couche métallique pour collecter un courant image induit par des courants de Foucault circulant dans la couche métallique lorsque la carte est soumise à un champ électromagnétique. Chacune de ces deux antennes RF comporte une partie configurée pour permettre un couplage magnétique de cette antenne avec la première antenne RF. Pour ce faire, la couche métallique comprend une zone d'évidemment, la première antenne RF étant positionnée dans ou en regard de cette zone d'évidemment, et une partie de chacune des deux autres antennes RF est positionnée en regard de la zone d'évidemment pour permettre l'établissement du couplage magnétique avec la première antenne RF. En établissant un tel couplage au travers de la zone d'évidemment, la puce RF de la carte peut ainsi utiliser la deuxième antenne RF pour communiquer en sans contact avec l'extérieur. Au moins deux fentes sont en outre ménagées dans la couche métallique, chacune pour faciliter le couplage magnétique d'au moins une des deux autres antennes avec la première antenne RF et ce quelles que soient les conditions d'opération de la carte.

A cet effet, la présente invention concerne une carte à puce comprenant une carte à puce comprenant un corps de carte de forme générale rectangulaire formé au moins en partie par une couche métallique comprenant une zone d'évidement, une puce RF, une première antenne RF disposée dans ou en regard de la zone d'évidement, ladite première antenne RF étant connectée électriquement à la puce RF, la couche métallique étant constituée par une première région et une deuxième région entièrement délimitées par une droite parallèle à un petit côté de la carte, la première région contenant entièrement la zone d'évidement et sa surface étant plus petite que celle de la deuxième région, une première fente connectant la zone d'évidement à un bord périphérique de la première région, une deuxième fente débouchant soit sur un bord périphérique de la couche métallique soit dans la zone d'évidement, la deuxième fente se terminant par une partie fermée dans la deuxième région; une deuxième antenne RF isolée électriquement de la couche métallique et de la première antenne RF et configurée pour permettre un couplage avec la première antenne, la deuxième antenne comportant au moins une spire en regard de la première fente et une troisième antenne RF isolée électriquement de la couche métallique, de la première antenne RF, et de la deuxième antenne RF et configurée pour permettre un couplage avec la première antenne, la troisième antenne comportant au moins une spire en regard de la deuxième fente.

L'invention concerne également un procédé de fabrication de telles cartes à puce. Des modes de réalisation particuliers, ainsi que d'autres aspects de l'invention, sont décrits plus en détail ci-après.

Dans le présent exposé, des exemples de mises en oeuvre de l'invention sont décrits en relation avec une carte à puce de type « dual », c'est-à-dire une carte à double interface de communication, ayant la capacité de communiquer aussi bien en mode avec contact (via des contacts externes) qu'en mode sans contact (via une structure d'antenne RF). On notera toutefois que l'invention peut s'appliquer plus généralement à une quelconque carte à puce configurée pour communiquer en sans contact, et ce qu'elle est la capacité ou non de fonctionner aussi en mode avec contact.

De plus, on considère dans les exemples qui suivent que la carte à puce est une carte bancaire, telle qu'une carte de paiement par exemple. Cette carte à puce peut être conforme à la norme ISO 7816 et peut fonctionner selon le standard EMV, bien que ni l'un ni l'autre de ces aspects ne soit obligatoire pour mettre en oeuvre l'invention. Plus généralement, l'invention s'applique à une quelconque carte à puce métallique configurée pour mettre en oeuvre une transaction en mode sans contact, y compris des cartes EMV ou des cartes à puce utilisant un autre standard de transaction, par exemple le standard NFC (selon par exemple ISO14443-2 , ISO 10373-6, « EMV Contactless Certification »), standard NFC Forum. De façon générale, la carte à puce de l'invention peut être configurée pour réaliser une transaction d'un type quelconque, telle que des transactions bancaires (transactions de paiement, de transfert, de débit...), des transactions d'authentification, etc.

Sauf indications contraires, les éléments communs ou analogues à plusieurs figures portent les mêmes signes de référence et présentent des caractéristiques identiques ou analogues, de sorte que ces éléments communs ou analogues ne sont généralement pas à nouveau décrits par souci de simplicité.

Les termes « premier(s) » (ou première(s)), « deuxième(s) », etc. sont utilisés dans ce document par convention arbitraire pour permettre d'identifier et de distinguer différents éléments (tels que des clés, des dispositifs, etc.) mis en oeuvre dans les modes de réalisation décrits ci-après.

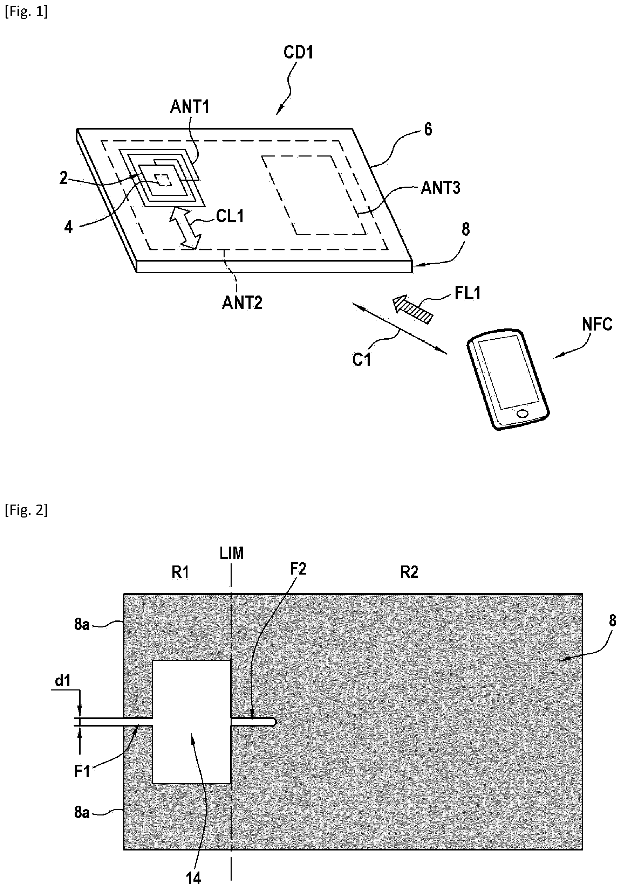

La **figure 1** représente une carte à puce CD1 métallique configurée pour communiquer en mode sans contact avec l'extérieur, par exemple avec un lecteur NFC (ou lecteur) externe. La carte à puce CD1 comprend une puce RF 4, un corps de carte 6 et trois antennes RF, à savoir une première antenne RF ANT1, une deuxième antenne RF ANT2 et une troisième antenne RF ANT3. La puce RF 4 ainsi que les trois antennes RF ANT1, ANT2 et ANT3 sont positionnées sur ou dans le corps de carte 6.

Le corps de carte 6 est formé au moins en partie (ou comprend) une couche métallique 8. Cette couche métallique 8 peut être constituée d'un seul métal, tel que de l'acier inox ou de l'aluminium par exemple, ou d'un alliage de plusieurs métaux différents. La couche métallique 8 peut comprendre une pluralité de sous-couches métalliques. Selon un exemple particulier, le corps de carte 6, et plus généralement la carte à puce CD1 est dépourvue de ferrite, ce qui permet de simplifier la fabrication de la carte tout en assurant un fonctionnement symétrique des deux faces de la carte.

La carte à puce à puce est de forme générale rectangulaire (les angles étant légèrement arrondis). Dans les exemples considérés ici, le corps de carte 6 est au format ID1 d'une carte de crédit, bien que d'autres formes soient possibles pour mettre en oeuvre l'invention.

La puce RF 4 est une puce électronique configurée pour établir une communication sans contact avec le lecteur NFC externe en utilisant les antennes RF ANT1 et selon les conditions opérationnelles au moins l'une des antennes ANT2, ANT3, comme décrit ci-après. Pour ce faire, la puce RF 4 est connectée électroniquement à la première antenne RF ANT1 mais chacune des antennes RF ANT2 et ANT3 est isolée électriquement de la puce RF 4 et de la première antenne RF ANT1. Les antennes ANT2 et ANT3 sont également isolées électriquement l'une de l'autre.

L'antenne ANT1 est au moins en partie en regard d'une partie de l'antenne ANT2 et en regard d'au moins une partie de l'antenne ANT3 pour permettre, selon les conditions opérationnelles, un couplage magnétique par induction entre la première antenne ANT1 et au moins l'une des deux antennes ANT2 et ANT3 et ainsi permettre à la puce RF 4 d'utiliser la deuxième antenne RF ANT2 et/ou la troisième antenne RF ANT3 pour établir une communication sans contact C1 avec le lecteur NFC externe, comme décrit plus en détail ci-après.

La puce RF 4 peut comprendre par exemple un microcontrôleur (ou un processeur) configuré pour établir une communication sans contact avec l'extérieur de la carte à puce CD1 (avec le lecteur NFC externe dans cet exemple) en utilisant les première et deuxième antennes RF ANT1, ANT2 (et/ou les première et troisième antennes RF ANT1, ANT3) couplées ensemble par induction magnétique.

A titre d'illustration, la **figure 2** représente la seule la couche métallique 8 selon un mode de réalisation.

Dans cet exemple, la couche métallique 8 comprend une zone d'évidemment 14 débouchant sur un bord (ou contour) périphérique 8a de la couche métallique 8. La zone d'évidemment 14 est une ouverture (ou zone) traversante ménagée dans la couche métallique 8 pour permettre le positionnement en vis-à-vis de la première antenne RF ANT1 avec une partie de la deuxième antenne RF ANT2 comme décrit ci-après. La forme et les dimensions de cette zone d'évidemment 14 peuvent être adaptées selon le cas. A titre d'exemple, la zone d'évidemment 14 ménagée dans la couche métallique 8 est rectangulaire.

Dans la présente demande, et comme représenté à la figure 2, on considère que la couche métallique est constituée par deux régions R1, R2 délimitées par une droite LIM parallèle à un petit côté de la carte, la première région R1 contenant entièrement la zone d'évidement 14 et sa surface étant plus petite que celle de la deuxième région R2.

Dans le mode de réalisation représenté à la figure 2, la droite LIM est tangente à la zone d'évidement 14 sur son côté le plus proche du centre de la carte à puce.

Dans l'exemple représenté en **figure 2****,** la couche métallique 8 comprend une première fente F1 qui connecte ou raccorde un bord périphérique 8a de la première région R1 avec la zone d'évidemment 14. Autrement dit, la zone d'évidemment 14 émerge (ou débouche) sur le bord périphérique 8a via cette première fente F1. Cette première fente F1 se caractérise par une distance d1 séparant deux bords périphériques opposés de la couche métallique 8, la valeur de cette distance d1 pouvant varier selon le cas.

La position de la zone d'évidemment 14 dans la couche métallique 8 peut varier selon le cas. Selon l'exemple particulier représenté en **figure 2****,** la zone d'évidemment 14 est positionnée dans le voisinage d'un bord périphérique 8a de la couche métallique 8, ce qui permet d'assurer un couplage magnétique FL1 performant entre les antennes RF ANT1 et ANT2, comme expliqué plus en détail ci-après.

D'autres implémentations sont toutefois possibles, dans lesquelles par exemple la zone d'évidemment 14 est positionné au centre (ou substantiellement au centre) de la couche métallique 8, étant entendu que cette zone d'évidemment 14 est toujours configurée pour déboucher sur (ou être raccordée à) à un bord périphérique 8a de la couche métallique 8 via une première fente F1.

Cette zone d'évidement 14 correspond à peu près à la zone d'accueil du module , cette zone d'accueil étant spécifiée par les standards pour que les terminaux puissent connecter les contacts d'un module 2 décrit ci-après.

Dans un mode de réalisation, les spires conductrices de la première antenne RF ANT1 s'étendent sous la forme d'un enroulement autour de la puce RF 4 dans la zone d'évidemment 14. Cet arrangement permet de positionner la puce RF 4 au plus proche de la première antenne RF ANT1 et ainsi de limiter la complexité de fabrication de la carte à puce CD1, notamment la connexion électrique entre la puce RF 4 et la première antenne ANT1.

On considère à présent des modes de réalisation particuliers dans lesquels la couche métallique 8 comprend une zone d'évidemment 14 selon la configuration illustrée en **figure 2****.**

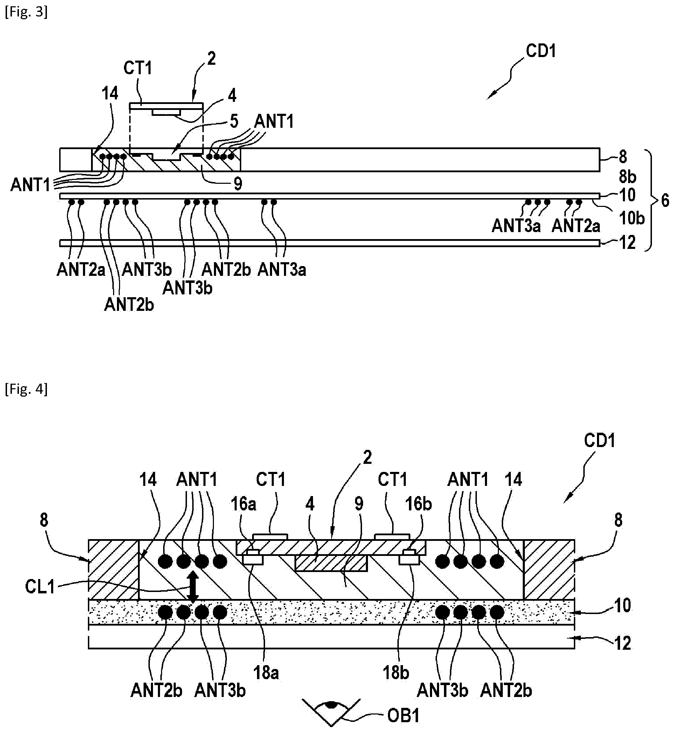

En particulier, la **figure 3** représente schématiquement une vue éclatée en coupe de la carte à puce CD1 et la **figure 4** représente schématiquement une vue de détail en coupe de la carte à puce CD1, selon au moins un mode réalisation particulier.

Comme représenté en **figure 3****,** on considère que la puce RF 4 est comprise (ou embarquée) dans un module électronique 2, ce dernier étant inséré dans le corps de carte 6. Le module électronique 2 est par exemple positionné dans une cavité 5 ménagée sur la face supérieure du corps de carte 6. Pour ce faire, la zone d'évidemment 14 comprend un matériau électriquement isolant 9 dans lequel est ménagée la cavité 5 pour accueillir le module électronique 2. Ainsi, la puce RF 4 est positionnée dans la zone d'évidemment 14 (ou, en variante, en regard et au-dessus de la zone d'évidemment 14). A noter toutefois que divers aménagements de la puce RF 4 sont possibles. Des variantes sont notamment possibles dans lesquelles la puce RF 4 n'est pas disposée dans, ou en regard de, la zone d'évidemment 14.

Selon une variante de réalisation, la puce RF 4 (avec ou sans le module électronique 2) est positionnée sur (ou en regard de) la couche métallique 8. A cette fin, un matériau isolant peut être disposé entre la puce RF 4 et la couche métallique pour assurer l'isolation électrique.

Dans l'exemple de la **figure 3****,** le module électronique 2 comporte sur sa face supérieure des contacts externes (ou plages de contact) CT1 configurés pour permettre une communication par contact entre la puce RF 4 un lecteur NFC externe prévu à cet effet (par exemple avec le lecteur NFC). Plus particulièrement, le module électronique 2 peut comprendre un circuit imprimé (ou PCB pour « Printed Circuit Board ») comprenant sur sa face supérieur les contacts externes CT1 et sur sa face inférieure la puce RF 4. Les contacts externes CR1 sont des zones métalliques conçues pour accueillir des broches de connexion d'un lecteur NFC externe. Ces contacts externes CT1 peuvent être conformes à la norme ISO 7816, bien que d'autres exemples soient possibles. Le module électronique 2 est disposé dans la carte à puce CD1 de sorte que ses contacts externes CT1 sont accessibles depuis la surface supérieure du corps de carte 6 pour permettre à la puce RF 4 de communiquer par contact avec un lecteur NFC externe.

Comme déjà indiqué, des modes de réalisation sont également possibles sans de tels contacts externes CT1. De plus, l'intégration de la puce RF 4 dans à le module électronique 2 tel que représenté sur les figures n'est pas obligatoire, d'autres aménagements de la puce RF 4 étant possibles sans un tel module.

Dans l'exemple de la figure 3, la puce RF 4 est disposée dans la zone d'évidemment 14. Selon une variante, la première antenne RF ANT1 est disposée hors de la zone d'évidemment 14, à savoir en regard de la zone d'évidement 14 (en alignement au-dessus de celle-ci). La zone d'évidement 14 est ainsi intercalée entre la première antenne RF ANT1 d'une part et les deuxième et troisième antennes RF ANT2 et ANT3 d'autre part pour permettre un couplage CL1 par induction magnétique entre ladite première antenne ANT1 et au moins l'une desdites deuxième et troisième antennes ANT2, ANT3.

La puce RF 4, et plus généralement le module électronique 2, peuvent être aménagés dans la couche isolante 9 (appelé couramment « inlay »). Cette configuration permet de faciliter le montage de la puce RF 4 et de la première antenne RF ANT1 dans le corps de carte 6.

Comme représenté en **figure 4****,** le corps de carte 6 comprendre au moins une couche isolante externe 12 ménagée sur la face inférieure 10b de la couche isolante 10 de sorte à recouvrir et protéger les deuxième et troisième antennes RF ANT2, ANT3. Au moins une couche isolante de protection peut également être ménagée si besoin sur la face supérieure du corps de carte.

Chacune des antennes RF ANT1, ANT2, ANT3 comprend au moins une spire électriquement conductrice de sorte à permettre des échanges de signaux RF entre la carte à puce CD1 et l'extérieur. Les antennes RF ANT1, ANT2 et ANT3 peuvent chacune être constituées par exemple d'une piste, fil ou membre électriquement conducteur formant une ou des spires conductrices. On considère dans le cas présent que les première, deuxième et troisième antennes RF ANT1, ANT2, ANT3 comprennent chacune une pluralité de spires conductrices. Diverses techniques de fabrication (filaire, par dépôt, par gravure) bien connues en soi peuvent être utilisées pour réaliser ces antennes RF. Les caractéristiques physiques (forme/taille de l'intersection, longueur de l'antenne, nombre de spire, matériau, etc.) des antennes RF ANT1, ANT2 et ANT3 peuvent être adaptées au cas par cas afin notamment de permettre des communications sans fil aux fréquences (ou plages de fréquences) souhaitées.

Plus précisément, comme représenté en **figure 3****,** la première antenne RF ANT1 comprend une pluralité de spires électriquement conductrices - dites « premières » spires conductrices - disposées dans la zone d'évidemment 14. Dans ce cas particulier, la taille de de l'antenne RF ANT1 est donc limitée dans la mesure où ses premières spires conductrices sont contenues dans la zone d'évidemment.

Par ailleurs, la deuxième antenne RF ANT2 et la troisième antenne RF ANT3 sont isolées électriquement de la couche métallique 8 et de la première antenne RF ANT1. Les deuxième et troisième antennes RD ANT2, ANT3 sont isolées électriquement l'une de l'autre.

Cette isolation peut être assurée de différentes manières. Par exemple si les deuxième et troisième antennes ANT2, ANT3 sont réalisées par gravure, une couche isolante (en anglais « solder mask ») peut être placée entre les deuxième et troisième antenne ANT2, ANT3 et la couche métallique 8 pour éviter un court-circuit et l'oxydation de la deuxième antenne. Selon un autre exemple, les deuxième et troisième antennes ANT2, ANT3 peuvent chacune être constituées par un fil conducteur entouré d'une gaine plastique isolante.

A titre d'exemple, on considère que le corps de carte 6 comprend une couche électriquement isolante 10 (pouvant être appelée couramment « inlay » qui signifie « inner layer » en anglais) intercalée entre la deuxième antenne RF ANT2 d'une part, et la couche métallique 8 et la zone d'évidement 14 d'autre part. La couche isolante 10 se trouve en particulier à l'interface entre la deuxième antenne ANT2 et le matériau isolant 9 dans lequel s'étend la première antenne RF ANT1.

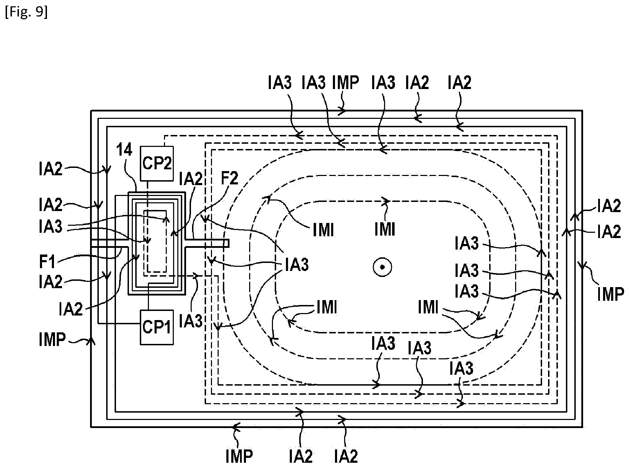

Sur la figure 9, on a illustré la circulation des différents courants sur la carte dans un exemple de réalisation :
- IMP représente un courant de Foucault périphérique dont une boucle principale circule en périphérie de la carte lorsque celle-ci est centrée avec le lecteur ;
- IA2 est un courant image induit par ce courant de Foucault périphérique et circulant dans la deuxième antenne ANT2. Il est acheminé jusqu'au niveau de la zone d'évidemment 14 ;
- IMI représente un courant de Foucault interne dont une boucle principale circule dans la deuxième région de la carte lorsque celle-ci est décentrée par rapport au lecteur ;
- IA3 est un courant image induit par ce courant de Foucault interne et circulant dans la deuxième antenne ANT3. Il est acheminé jusqu'au niveau de la zone d'évidemment 14.

IA2 et IA3 circulent dans le même sens.

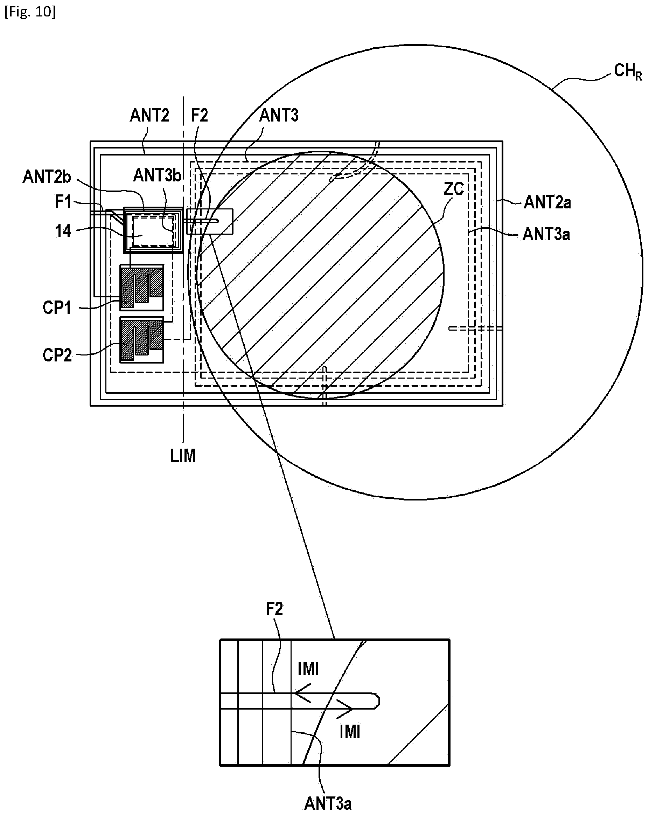

Comme illustré à la **figure 10** notamment, on considère que la deuxième antenne RF ANT2 comprend deux parties d'antenne, à savoir une première partie d'antenne ANT2a, et une deuxième partie d'antenne ANT2b connectées électriquement l'une à l'autre.

De même, la troisième antenne RF ANT3 comprend deux parties d'antenne, à savoir une première partie d'antenne ANT3a, et une deuxième partie d'antenne ANT3b connectées électriquement l'une à l'autre.

Plus précisément, les premières parties ANT2a et ANT3a des deuxième et troisième antennes RF ANT2, ANT3 comprennent une pluralité de spires électriquement conductrices, qui s'étendent en regard (ou en vis-à-vis) de la couche métallique 8 pour collecter un courant image induit par des courants de Foucault circulant dans la couche métallique 8 lorsque celle-ci est soumise à un champ magnétique incident.

Plus précisément et comme expliqué en détails ci-après :
(i) la première partie ANT2a de la deuxième antenne ANT2 est agencée pour collecter de façon efficace les courants de Foucault circulant dans la couche métallique lorsque la carte à puce CD1 est centrée par rapport à l'antenne du lecteur NFC ;
(ii) la première partie ANT3a de la troisième antenne ANT3 est agencée pour collecter de façon efficace les courants de Foucault circulant dans la couche métallique lorsque la carte à puce CD1 est dans une position décentrée par rapport à l'antenne du lecteur NFC).

Dans ce document on considérera que la carte est centrée par rapport à l'antenne du lecteur NFC lorsque toute la surface de la carte est exposée à un champ magnétique généré par l'antenne du lecteur NFC uniforme et d'intensité maximale sur la surface de la carte.

Dans le mode de réalisation de la figure 3, au niveau de zone d'évidemment 14, les spires ANT2b de la deuxième antenne ANT2 entourent les spires ANT3b de la troisième antenne ANT3. En variante, les spires ANT3b de la troisième antenne ANT3 entourent les spires ANT2b de la deuxième antenne ANT2. En variante, les spires ANT2b et ANT3b ne sont pas dans un même plan.

Comme représenté en **figure 4****,** dans au moins un mode de réalisation, la puce RF 4 est connectée électriquement à la première antenne RF ANT1. Dans l'exemple considéré ici, la connexion électrique est assurée via des plots (ou plages) de connexion 16a et 16b du module électronique 2, ces plots étant connectés respectivement à des plots (ou plages) de connexion 18a et 18b prévues à cet effet dans la zone d'évidemment 14 (dans le matériau isolant 9 dans cet exemple). Les plots de connexion 18a et 18b sont à leur tour connectés respectivement aux deux extrémités de la première antenne RF ANT1. D'autres manières de connecter la puce RF 4 avec la première antenne RF ANT1 sont toutefois envisageables.

Diverses configurations des deuxième et troisième antennes RF ANT2, ANT3 sont possibles. Selon un mode de réalisation préféré, la deuxième partie ANT2b de la deuxième antenne ANT2 et la deuxième partie ANT3b de la troisième antenne ANT3 s'étend exclusivement en regard de la zone d'évidement 14. Autrement dit, ces parties d'antennes ANT2b, ANT3b, formées d'une pluralité de spires conductrices, sont disposées en regard de la zone d'évidement 14 de sorte à ce qu'elles ne s'étendent pas en regard de la couche métallique 8. En particulier, ces parties d'antennes ANT2b, ANT3b ne se superposent pas (ou ne recouvrent pas) la couche métallique 8 en périphérie de la zone d'évidemment 14, ce qui permet d'optimiser le flux du champ magnétique auquel sont soumis ces deuxièmes parties d'antenne ANT2b, ANT3b ainsi que la première antenne RF ANT1. Bien qu'il ne soit pas souhaitable qu'une portion de la deuxième partie ANT2b, ANT3b de la deuxième antenne ANT2 ou de la troisième antenne ANT3 s'étende en regard de la couche métallique 8, une certaine tolérance peut être acceptée dans certains cas.

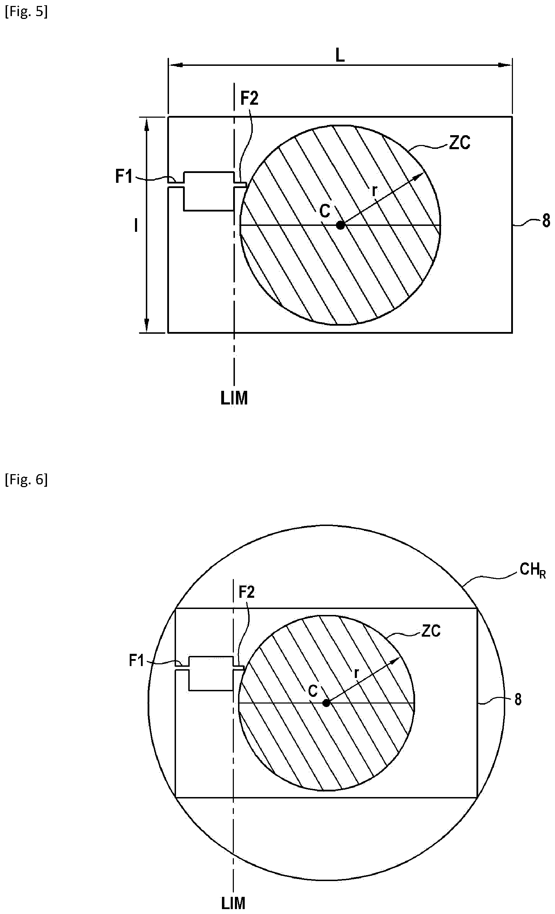

La **figure 5** illustre de façon hachurée, pour un mode particulier de réalisation de l'invention, une zone ZC privilégiée d'exploitation des courants de Foucault qui circulent sur la couche métallique 8 lorsque la carte à puce est exposée à un champ magnétique dans des conditions déterminées, cette zone privilégiée ZC étant comprise dans la région R2 de la couche métallique 8.

Cette figure 5 se place, à titre illustratif simplement, dans le contexte particulier des conditions opérationnelles définies par l"organisme international EMVCo et rappelées précédemment en référence à la **figure 16****.**

De façon connue, lorsqu'une surface métallique est soumise à un champ magnétique, ce champ magnétique induit sur cette surface des courants de Foucault qui circulent en boucle fermée, les boucles dominantes étant telles qu'elles maximisent la surface de ces boucles en vis-à-vis de du champ magnétique d'intensité maximale.

Ainsi lorsqu'une couche métallique est soumise à un champ magnétique uniforme sur toute la surface de la carte, la boucle dominante des courants de Foucault induits par le champ magnétique incident suit le contour de la carte.

Par contre, en supposant que le lecteur possède une antenne circulaire et qu'il produit un champ magnétique uniforme, dès lors que la surface métallique n'est plus entièrement en vis-à-vis d'un champ uniforme, la boucle dominante ne suit plus les contours de la carte, mais maximise la surface de cette boucle en vue directe avec le champ magnétique d'intensité maximum.

Autrement dit, en première approximation, la boucle dominante délimite la projection de ce champ sur la surface de la carte.

Dans un mode de réalisation de l'invention, la zone privilégiée ZC d'exploitation des courants de Foucault peut être une zone de la surface de la carte qui est soumise à un champ magnétique uniforme d'intensité maximale quelles que soient les conditions opérationnelles de la carte.

Par exemple, sur **la** **figure 5** on a représenté une carte à puce au format ID1 (longueur L de 85,6mm et une largeur l de 54,0mm), C le centre de la carte, assimilé par la suite au centre de la couche métallique 8, et une zone ZC d'exploitabilité des courants de Foucault constituée par un disque de centre C et de rayon r de 2,5 cm.

Les inventeurs ont déterminé que quelle que soit la position du centre C de la carte dans le volume opérationnel défini par l'organisme EMVCo, une telle zone privilégiée d'exploitabilité ZC (disque de rayon 25mm au centre de la carte) est intégralement comprise dans un champ électromagnétique généré par l'antenne du lecteur NFC d'intensité suffisante pour que des courants de Foucault circulant dans cette zone puissent être exploités par l'invention.

Sur la **figure 6****,** on a représenté par un cercle CH_{R} délimitant un champ magnétique d'intensité maximale généré par un lecteur NFC. Cette figure suppose une antenne de lecteur NFC parfaitement circulaire et symétrique en rotation.

Sur cette figure le centre C de la carte à puce CD1 est situé au centre du cercle CH_{R}.

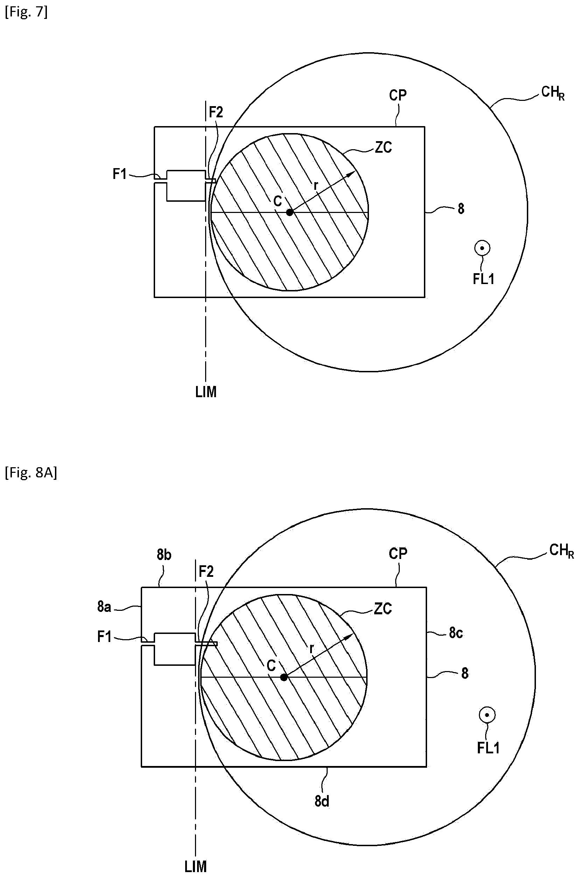

Sur la **figure 7****,** on a représenté la carte à puce CD1, le centre C de la carte à puce CP étant décalé de 25 mm par rapport au centre du cercle CH_{R} ; ce décalage de 25 mm correspondant au décalage maximum de la carte dans le volume opérationnel défini par EMVCo (point 6 de la figure 16).

Les inventeurs ont constaté que la zone ZC d'exploitabilité des courants de Foucault représentée à la figure 7 (disque de rayon 25mm centré sur la carte) se situe intégralement dans le champ CH_{R} d'intensité maximale du lecteur NFC, en particulier pour le décalage maximum (point 6) de la carte dans le volume opérationnel défini par EMVCo, et donc pour toute position de la carte dans les conditions opérationnelles déterminées.

L'invention peut être utilisée dans d'autres contextes que celui de la norme EMVCo.

D'une façon générale, la zone ZC d'exploitabilité des courants de Foucault utilisée dans l'invention peut être définie de sorte à ce que cette zone ZC se situe intégralement dans un champ magnétique d'intensité maximale, quelle que soit la position de la carte dans des conditions opérationnelles prédéterminées.

Sur les figures 8A à 8D, on a représenté dans quatre exemples, une couche métallique 8 comportant :
(i) une zone d'évidement 14 reliée par une première fente F1 au bord 8a correspondant au petit côté de la couche métallique 8 le plus proche de la zone d'évidement ; et
(ii) une fente F2, remarquable en ce qu'elles débouche soit sur un bord de la couche métallique 8, soit dans la zone d'évidement 14 et en ce qu'elle comporte une extrémité fermée située dans la deuxième région R2 de la couche métallique, et dans les exemples des figures 8A à 8C plus précisément dans une zone privilégiée ZC d'exploitabilité des courants de Foucault.

Sur ces figures 8A à 8D, le symbole FL1 représente le sens du champ magnétique du lecteur NFC. Ce champ magnétique génère des boucles de courant de Foucault sur la couche métallique 8.

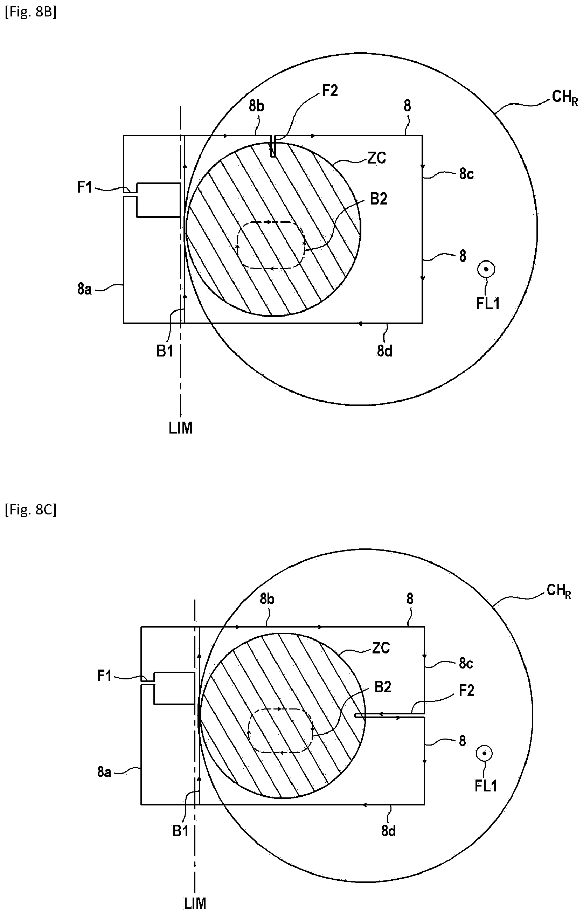

Par souci de simplicité, sur les figures 8B à 8D correspondant à l'utilisation décentrée de la carte, seules deux boucles B1, B2 du courant de Foucault interne IMI de la figure 9 ont été représentées dont une boucle dominante B1.

Les courants de Foucault se forment en boucles fermées sur toute la surface métallique ayant un champ magnétique du lecteur incident. Le sens des courant de Foucault dans ces boucles est en opposition de phase par rapport au champ magnétique qui les a créées, soit donc un sens avec les aiguilles de la montre pour l'exemple du champ magnétique incident de la figure 9.

Dans les quatre exemples, les fentes F1 et F2 sont ainsi agencées pour laisser passer le champ magnétique généré par un lecteur de la carte à puce et pour être parcourues par un courant de Foucault circulant sur la couche métallique 8.

Ces fentes F2 permettent d'orienter les courants de Foucault pour que ces derniers soient en phase avec le flux magnétique issu du terminal autour de la fente, et ainsi que les courants de Foucault autour de la fente ne s'opposent pas à ce flux magnétique.

Les spires des antennes ANT2 et ANT3 étant toutes dans des plans parallèles à celui de la couche métallique portant les boucles de courant de Foucault, un courant de conduction sera induit par effet d'image dans ces fils conducteurs formant les spires de l'antenne et par conséquent, en opposition de phase par rapport aux courant de Foucault auxquels ils présentent l'effet image. Ces courants images induits dans les différentes spires des ANT2 et ANT3 sont donc en phase avec le champ magnétique du lecteur NFC.

Sur la **figure 10** on a représenté en plus de la couche métallique 8, deux antennes ANT2, ANT3 (deuxième et troisième antennes au sens de l'invention) implémentées sur une couche de plastique non représentée.

La deuxième antenne ANT2 (respectivement la troisième antenne ANT3) comporte une première partie ANT2a (respectivement ANT3a) et une deuxième partie ANT2b (respectivement ANT3b).

La deuxième antenne ANT2a et la troisième antenne ANT3 sont configurées de sorte que le courant circule dans le même sens dans les premières ANT2a, ANT3a et deuxièmes ANT2b, ANT3b parties des deuxième et troisième antennes ANT2, ANT3.

Dans le mode de réalisation de la **figure 10****,** la première partie ANT2a de la deuxième antenne ANT2 est la partie la plus périphérique. Elle est en agencée en regard de la couche métallique 8 et s'étend le long des quatre bords de la couche métallique 8. Elle comporte au moins une spire qui chevauche la première fente F1.

Dans le mode de réalisation de la figure 10, la première partie ANT3a de la troisième antenne ANT3 est remarquable en ce qu'elle est agencée en regard de la deuxième région R2 de la couche métallique 8 et qu'elle a au moins une spire en regard de la deuxième fente F2.

Ainsi, au moins une spire de la troisième antenne ANT3 est en mesure de capter un courant image induit par un courant circulant dans une boucle principale d'un courant de Foucault généré par un champ magnétique incident dans les conditions opérationnelles de la carte à puce, lorsque cette boucle se situe dans la deuxième région R2.

Dans le mode de réalisation de la figure 10, la deuxième partie ANT2b, ANT3b de chacune des deuxième et troisième antennes ANT2, ANT3 ne se superpose pas avec la couche métallique 8 mais se superpose avec au moins une partie de la zone d'évidement 14.

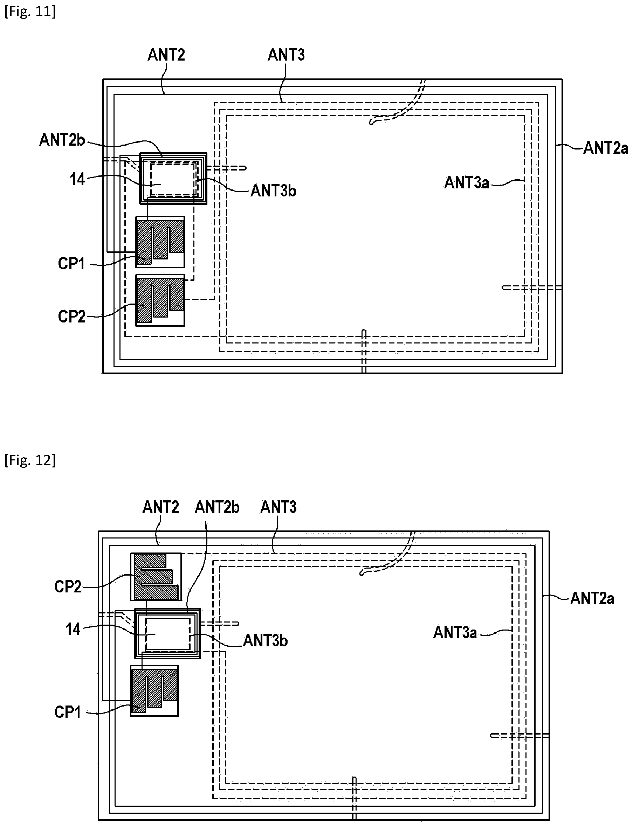

La **figure 11** représente une carte à puce CD1 conforme à un mode de réalisation de l'invention. Elle comprend notamment une première antenne ANT1 connectée électriquement à une puce RF, une deuxième antenne ANT2, une troisième antenne ANT3 et une couche métallique 8.

La couche métallique 8 comportant une zone d'évidement 14 ou cavité dont la taille est au moins égale à la taille du substrat diélectrique qui accueille la première antenne ANT1, la première antenne ANT1 étant disposée dans ou en regard de la zone d'évidement, de telle sorte que la première antenne ANT1 ne chevauche pas la couche métallique 8.

Dans mode de réalisation de la figure 11, la première antenne ANT1 est implémentée sur le substrat portant une plaque de contact. En variante, la première antenne ANT1 peut être hébergée par un autre substrat diélectrique placé dans la zone d'évidement 14 et connectée au module de plaque de contact, portant la puce RF, par une connexion ACF.

Dans le mode de réalisation de la figure 11, la zone d'évidement 14 débouche sur un bord périphérique 8a de la couche métallique. A cet effet, la zone d'évidement est reliée au bord périphérique 8a de la couche métallique par une première fente F1 qui s'étend de la zone d'évidement vers le bord 8a de la couche métallique 8.

Dans le mode de réalisation de la figure 11, une deuxième fente F2 s'étend de la zone d'évidement 14 vers l'intérieur (ou zone centrale) de la couche métallique. Cette deuxième fente est fermée et son extrémité se situe dans la deuxième région R2.

Dans le mode de réalisation décrit ici, les deuxième et troisième antennes ANT2, ANT3 sont isolées électriquement de la couche métallique 8 au moyen d'une couche d'isolation diélectrique.

Comme illustré figure 10, la première partie ANT2a de la deuxième antenne ANT2 est la partie la plus périphérique. Elle est en agencée en regard de la couche métallique 8 et s'étend le long des quatre bords de la couche métallique 8. Elle chevauche la fente F1.

Comme illustré figure 10, la première partie ANT3a de la troisième antenne ANT3 est agencée en regard de la couche métallique 8 et moins une spire chevauche la fente F2 dans la deuxième région R2.

Comme illustré à la figure 10, la deuxième partie ANT2b (respectivement ANT3b) de la deuxième antenne ANT2 (respectivement de la troisième antenne ANT3) termine la deuxième antenne ANT2 (respectivement la troisième antenne ANT3). Elle ne se superpose pas avec la couche métallique 8 mais elle se superpose avec au moins une partie de la zone d'évidement 14.

Comme décrit en détails ci-après, la deuxième partie ANT2b de la deuxième antenne ANT2 et/ou la deuxième partie ANT3b de la troisième antenne ANT3 assurent un couplage inductif entre la deuxième et/ou la troisième antenne ANT2, ANT3 et la première antenne ANT1 selon les conditions opérationnelles.

Dans le mode de réalisation décrit ici, la carte CD1 comporte un élément capacitif CP1 connecté en parallèle à la deuxième antenne ANT2 et un élément capacitif CP2 connecté en parallèle à la troisième antenne ANT3. Dans le mode de réalisation décrit ici, les éléments capacitifs CP1, CP2 sont des condensateurs à plaques parallèles. D'autres implémentations peuvent être utilisées. L'élément capacitif CP1 et/ou l'élément capacitif CP2 peut être mis en oeuvre sous la forme d'un composant capacitif discret.

Dans l'exemple décrit ici, les composants capacitifs CP1, CP2 sont disposés dans la couche isolante 10 ou sur la face inférieure 10b de cette couche isolante 10. Une fois le couplage magnétique CL1 établi, les antennes RF ANT1 et ANT2 (respectivement ANT1 et ANT3) sont connectées en parallèle avec le composant capacité CP1 (respectivement CP2). Le composant capacitif CP1 (respectivement CP2) forme ainsi avec les antennes RF ANT1 et ANT2 (respectivement ANT1 et ANT3) un circuit RLC permettant d'adapter la fréquence de résonnance de la deuxième antenne RF ANT2 (respectivement de la troisième antenne ANT3) de sorte à ce qu'elle soit par exemple égale à 13,56 MHz, ce qui permet une communication C1 en mode sans contact de type RFID avec un lecteur RFID (par exemple selon la norme ISO14443/ ISO 10373, notamment la version actuelle ISO/IEC 10373-6:2020 ou l'une quelconque des versions antérieures, ou une quelconque version ultérieure).

Le composant capacitif CP1 ou CP2 peut être de type interdigital et comprend deux jeux opposés de doigts conducteurs entremêlés les uns avec les autres, d'autres formes de condensateur étant toutefois possibles (condensateur à plaques parallèles, condensateur discret monté en surface, condensateur à fils parallèles, etc.).

Par exemple le premier composant capacitif CP1 (respectivement le deuxième composant capacitif CP2) est relié avec une extrémité de la première partie ANT2a (respectivement ANT3a) de la deuxième antenne ANT2 (respectivement de la troisième antenne ANT3) et avec une extrémité de la deuxième partie ANT2b (respectivement ANT3b) de la deuxième antenne ANT2 (respectivement e la troisième antenne ANT3).

Dans le mode de réalisation de la figure 11, les éléments capacitifs CP1 et CP2 connectés en parallèle respectivement à la deuxième antenne ANT2 et à la troisième antenne ANT3 sont du même côté de la zone d'évidemment 14.

Dans le mode de réalisation de la figure 12, les éléments capacitifs CP1 et CP2 sont de part et d'autre de la zone d'évidemment 14.

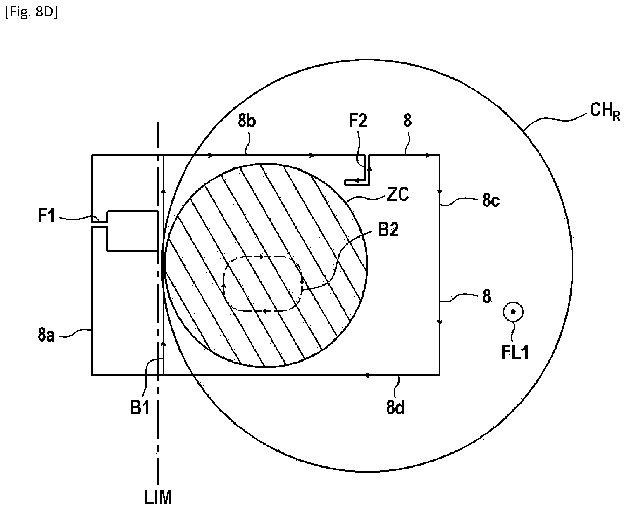

Les exemples de fentes F2 représentées aux figures 8 ne sont que des exemples non limitatifs. Toute fente débouchant soit dans la cavité 14 soit sur un bord de la carte et se terminant par une extrémité fermée dans la deuxième région R2, de préférence dans une zone ZC privilégiée d'exploitabilité des courants de Foucault peut être utilisée dans le contexte de l'invention.

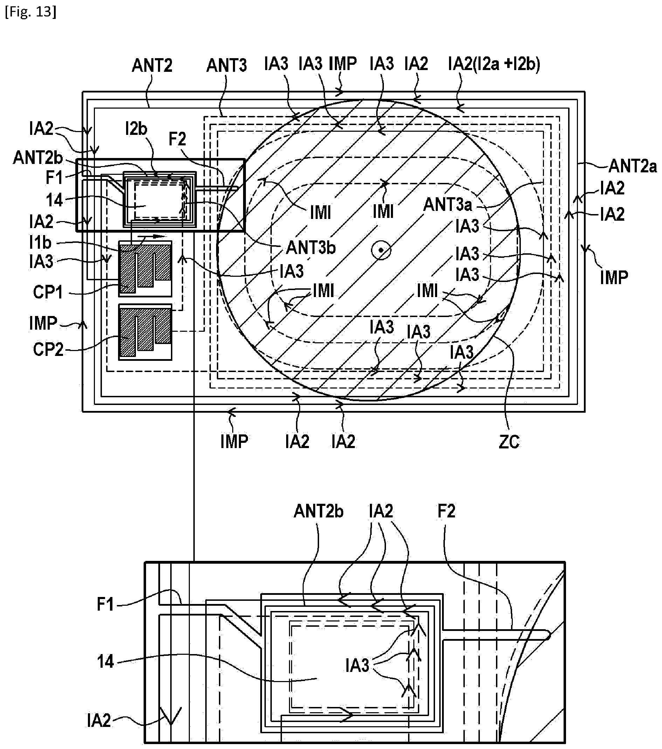

La **figure 13** illustre le fonctionnement de la carte à puce de la **figure 12** lorsque celle-ci est centrée par rapport à l'antenne du lecteur NFC, autrement dit lorsque la surface de la carte est exposée à un champ magnétique uniforme FL1 généré pat le lecteur.

Sous l'effet du champ magnétique FL1, des courants de Foucault IMP (en périphérie) et/ou IMI (internes) sont générés dans la couche métallique 8 selon les conditions opérationnelles de la carte. Ces courants de Foucault circulent sous forme de boucles fermées de courant en surface de la couche métallique 8. Ces courants de Foucault se forment sur la couche métallique 8 en boucles fermées dans une direction telle qu'ils créent un champ magnétique opposé au champ magnétique incident.

Dans l'exemple de la figure 13, les courants de Foucault circulent dans le sens des aiguilles d'une montre.

En supposant que toute la surface de la carte est exposée à un champ magnétique uniforme et comme dans le cas illustré à la figure 13, la boucle dominante des courants de Foucault IMP suit le contour périphérique de la couche métallique 8.

De façon connue de l'homme du métier, les courants de Foucault, circulant dans le sens des aiguilles d'une montre, induisent un courant image I2a qui circule dans la première partie d'antenne ANT2 dans le sens inverse des aiguilles d'une montre.

Comme représenté en **figure 13****,** on note IMP des courants de Foucault - dits premiers courants de Foucault - correspondant à des boucles dominantes circulant en surface de la couche métallique 8 au voisinage du contour périphérique de ladite couche métalliques 8. On note I1b des courants de Foucault - dits deuxièmes courants de Foucault - correspondant à des boucles secondaires circulant en surface de la couche métallique 8 au voisinage du contour périphérique de la zone d'évidemment 14.

Puisque les courants de Foucault circulent en boucles fermées, les courants de Foucault I1b sont en réalité la continuité des courants de Foucault IMP au voisinage du contour périphérique de la zone d'évidement 14. Comme cela apparaît de la **figure 13****,** les deuxièmes courants de Foucault I1b circulent, au voisinage de la deuxième partie d'antenne ANT2b, dans un sens de rotation (ou sens de circulation) opposé à celui des premiers courants de Foucault IMP circulant au voisinage du contour périphérique de la couche métallique 8. A titre d'exemple, on considère que les premiers et deuxièmes courants de Foucault IMP, I1b circulent selon respectivement les sens horaire et anthoraire, une configuration inverse étant toutefois possible selon l'orientation du champ magnétique FL1 considéré. La circulation en sens opposé des courants de Foucault IMP et I1b résulte en particulier de la continuité des courants de Foucault mentionnée ci-avant, ainsi que de la présence de la zone d'évidemment 14 qui est reliée dans cet exemple par la fente de raccordement F1 au contour périphérique 8a de la couche métallique 8.

Par conséquent, le courant IA2 circulant dans la deuxième antenne RF ANT2 est un courant induit résultant de deux composantes, à savoir : un courant image I2a induit par les premiers courants de Foucault IMP circulant en surface de la couche métallique 8 au voisinage de la première partie d'antenne ANT2a ; et un courant I2b qui est induit directement dans la deuxième partie d'antenne ANT2b par le champ magnétique incident FL1 au travers de la zone d'évidemment 14 (IA2 = I2a + I2b). La structure même de la carte à puce CD1 est conçue pour conduire à cette double contribution des courants induits I2a et I2b pour collecter dans la deuxième antenne RF un courant induit global IA2 le plus important possible.

Plus précisément, la première partie d'antenne ANT2a s'étendant en regard de la couche métallique 8 collecte un courant image I2a induit par les premiers courants de Foucault IMP circulant en surface de la couche métallique 8 sous l'effet du champ magnétique FL1 lorsque la carte à puce CD1 est centrée avec l'antenne du lecteur NFC.

Ces premiers courants de Foucault IMP correspondent à des boucles dominantes circulant en surface de la couche métallique 8 au voisinage des spires de la première partie d'antenne ANT2a. Comme déjà indiqué, la première partie de la deuxième antenne ANT2a peut s'étendre de préférence en regard d'une zone (ou bande) périphérique de la couche métallique 8 pour collecter un maximum d'énergie généré par les boucles dominantes des courants de Foucault. Les premiers courants de Foucault IMP circulant dans le voisinage de la première partie ANT2a de la deuxième antenne ANT2 (dans cet exemple en périphérie de la couche métallique 8) produisent un effet qui s'oppose au champ magnétique incident FL1. Le courant induit I2a collecté dans les spires de la première partie d'antenne ANT2a est lui-même un effet de réaction aux premiers courants de Foucault.

Le courant image I2a induit par les premiers courants de Foucault IMP est acheminé par conduction électrique jusqu'à la deuxième partie ANT2b de la deuxième antenne ANT2, du fait de la continuité électrique entre les première, et deuxième parties d'antenne ANT2a, ANT2b qui sont connectées ensemble.

Comme illustré en **figure 13****,** le courant image IA2 circule selon le même sens de rotation (ou même sens de circulation) dans les spires des première et deuxième parties d'antenne ANT2a, ANT2b, à savoir selon le sens antihoraire dans cet exemple. Cependant, du fait de la présence dans la couche métallique 8 de la zone d'évidemment 14 connectée via la fente de raccordement F1 au bord périphérique 8a, les deuxièmes courants de Foucault I1b (boucles secondaires) circulent au voisinage de la zone d'évidemment 14, en surface de la couche métallique 8, selon un sens de rotation (ou sens de circulation) opposé à celui des premiers courants de Foucault IMP circulant en périphérie de la couche métallique 8. A titre d'exemple, les deuxièmes courants de Foucault I1b circulent ici dans le sens antihoraire tandis que les premiers courants de Foucault IMP circulent suivant le sens horaire. Aussi, les deuxièmes courants de Foucault I1b circulant en périphérie de la zone d'évidemment 14 ne s'opposent pas au champ magnétique traversant la fente et contribuent à amplifier le courant image a circulant dans les spires de la troisième partie d'antenne ANT2c.

Par ailleurs, l'effet de la deuxième fente F2 est de pousser la boucle dominante de courant de Foucault vers la première partie ANT3a de la troisième antenne ANT3, ce qui augmente le couplage d'énergie entre les courants de Foucault de la couche métallique 8 et la troisième antenne au voisinage de la deuxième fente F2.

Comme déjà indiqué, la deuxième partie d'antenne ANT2b collecte en outre dans ses spires un courant I2b qui est induit directement par le champ magnétique incident FL1 capté au niveau de la zone d'évidemment 14 par la deuxième partie d'antenne ANT2c. Dans cet exemple, le champ magnétique FL1 est dirigé depuis la face supérieure de la carte à puce CD1 vers sa face inférieure. Aussi, la composante de courant I2b induite dans la deuxième partie d'antenne ANT2b circule également dans le sens antihoraire et s'ajoute donc au courant image I2a. Puisque les deux composantes de courant I2a et I2b circulent dans la même direction (composantes en phase) dans la deuxième antenne ANT2, elles s'ajoutent pour contribuer ensemble à la génération du courant induit global IA2 circulant dans la deuxième antenne ANT2.

Le courant global I2A circulant dans la deuxième partie d'antenne ANT2b induit à son tour un champ magnétique causant un couplage magnétique CL1 entre la première antenne RF ANT1 et la deuxième partie d'antenne RF ANT2b, et donc a fortiori entre la première antenne RF ANT1 et la deuxième antenne RF ANT2. L'action combinée du courant image I2a acheminé depuis la première partie d'antenne ANT2a d'une part, et du courant I2b induit par le champ magnétique FL1 au niveau de la zone d'évidemment 14 dans la troisième partie d'antenne ANT2c d'autre part, permet de maximiser la quantité d'énergie collectée dans la deuxième antenne RF ANT2 à partir du champ magnétique FL1, et donc de garantir un couplage magnétique CL1 performant entre les deux antennes RF ANT1, ANT2, ce qui permet de délivrer un maximum d'énergie à la puce RF 4 reliée à la première antenne RF ANT1.

La deuxième partie d'antenne ANT2b contribue ainsi à amplifier la récupération d'énergie car elle comprend également une composante de courant électrique directement induite par le champ magnétique incident du lecteur NFC. Le fait que le courant circule dans le même sens dans les deux parties de l'antenne ANT2 augmente le transfert d'énergie (récoltée à la fois par les courants de Foucault sur la surface de la couche métallique 8 combinée à celle récoltée directement induite par le flux magnétique incident à travers la zone de la cavité 14) par couplage à la première antenne ANT1 et donc à la puce RF 4.

De façon absolument équivalente, la deuxième partie ANT3b de la troisième antenne ANT3 contribue également à amplifier la récupération d'énergie car elle comprend également et de la même façon une composante de courant électrique directement induite par le champ magnétique incident du lecteur NFC. Le fait que le courant circule dans le même sens dans les deux parties de l'antenne ANT3 augmente le transfert d'énergie (récoltée à la fois par les courants de Foucault internes IMI sur la surface de la couche métallique 8 combinée à celle récoltée directement induite par le flux magnétique incident à travers la zone de la cavité 14) par couplage à la première antenne ANT1 et donc à la puce RF 4.

De retour à la figure 8A par exemple, lorsque la carte CD1 est décentrée par rapport au lecteur NFC, la boucle dominante B1 des courants de Foucault IMI circule dans la deuxième région R2 dans le sens horaire dans une boucle fermée le long des bords 8b, 8c, 8d de la couche métallique 8, cette boucle traversant la couche métallique du bord 8d vers le bord 8b selon un chemin qui maximise la surface de cette boucle en vue directe avec le champ magnétique d'intensité maximum.

Comme représenté en référence à la figure 10, la première partie ANT3a de la troisième antenne ANT3 est agencée de sorte qu'au moins une de ses spires chevauche la fente F2 dans la deuxième région F2, préférentiellement dans une zone privilégiée ZC d'exploitabilité des courants de Foucault ZC.

L'antenne ANT3a est ainsi en mesure de capter un courant image induit par un courant circulant dans la boucle dominante B1 du courant de Foucault induit par le champ magnétique lorsque la carte est décentrée, la boucle dominante B1 étant déviée par la fente F2, en vis-à-vis d'au moins une spire de la partie ANT3a.

En fonctionnement, sous l'effet du champ magnétique FL1 auquel est soumise la carte à puce CD1, la puce RF 4 est ainsi capable d'utiliser la deuxième antenne RF ANT2 et/ou la troisième antenne ANT3, l'une, l'autre ou ces deux antennes ANT2, ANT3 pouvant être couplée avec la première antenne RF ANT1 pour communiquer avec le lecteur NFC externe (en particulier pour échanger des signaux RF en transmission et/ou réception avec le lecteur NFC) quelle que soit la position de la carte par rapport au lecteur NFC dans conditions opérationnelles déterminées.

Lorsqu'un utilisateur présente la carte à puce CD1 au voisinage du lecteur NFC, une communication sans contact peut ainsi être établie entre le lecteur NFC et la carte à puce CD1, et ce quelles que soient la position et l'orientation de cette dernière vis-à-vis du lecteur NFC, le courant induit par les boucles dominantes des courants de Foucault étant collectés soit par la deuxième antenne ANT2, soit par la troisième antenne ANT3 selon que la carte est centrée ou décalée par rapport au lecteur, dans les limites des conditions opérationnelles de la carte.

Comme déjà indiqué, divers arrangements de la carte à puce CD1 peuvent être envisagés, notamment en ce qui concerne la configuration de forme, dimensions, position, etc. de la zone d'évidemment 14 et des fentes F1 et F2.

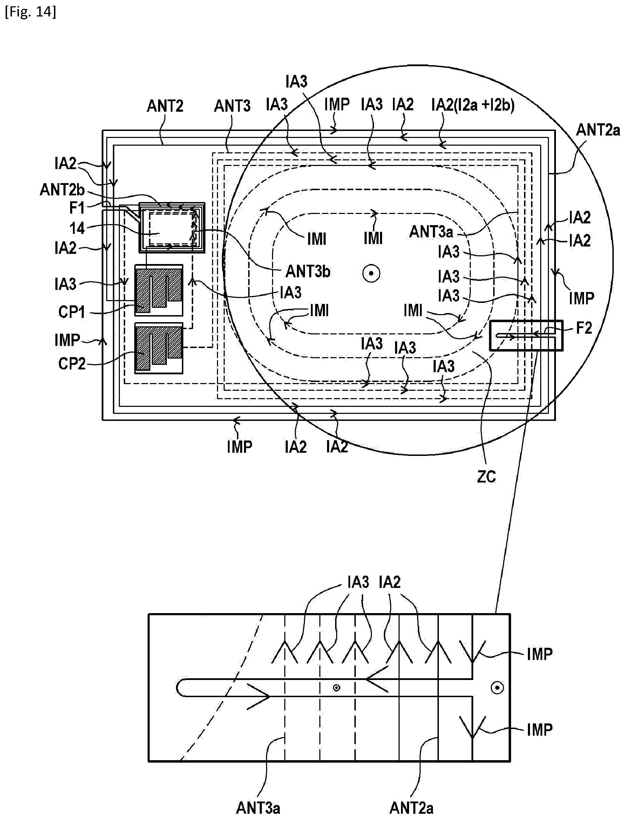

La **figure 14** illustre une autre carte à puce conforme à l'invention. Dans ce mode de réalisation, la deuxième fente F2 débouche sur un bord opposé au bord 8a dans lequel débouche la première fente F1.

Comme détaillé précédemment, le cercle CH_{R} représente le contour délimitant la région/zone d'intensité maximale du champ magnétique du lecteur NFC, dans le plan de la carte, où le champ peut être considéré comme approximativement uniforme.

La figure 14 illustre une situation dans laquelle la carte NFC est placée de manière décalée par rapport au centre du cercle CH_{R}, de sorte que la zone d'évidement 14, les deuxièmes parties d'antennes ANT2b et ANT3b sont en dehors de cette région de champ magnétique maximal.

La fente F2 débouche sur un bord de la carte et se termine par une partie fermée dans une la deuxième région R2 de la couche métallique.

Cette fente F2 est ainsi agencée pour dévier les boucles dominantes du courant de Foucault vers la zone ZC d'exploitation des courants de Foucaud en vis-à-vis de laquelle s'étend au moins une spire de la première partie ANT3a de la troisième antenne ANT.

Dans le mode de réalisation décrit ici, la profondeur de la fente F2 selon la dimension longitudinale de la carte à puce est choisie pour être au moins égale ou voisine de la distance des spires adjacentes de la première partie ANT3 de l'antenne ANT3 par rapport au bord de la couche métallique sur lequel débouche la fente F2.

Par ailleurs, et comme représenté dans la zone de détails de la figure 14, la fente F2 permet également au champ magnétique incident du lecteur de traverser la couche métallique 8 tout en étant en phase avec le courant électrique induit dans les spires de partir d'antenne ANT3a. Comme expliqué précédemment, le courant dans la troisième antenne ANT3 a pour composantes :
(i) une première composante correspondant au courant image capté par la troisième antenne ANT3a ; et
(ii) une deuxième composante créée par induction magnétique à travers l'ouverture de la fente F2 dans la partie des fils d'antenne de la troisième antenne ANT3 qui chevauchent la fente F2.

La **figure 15** représente schématiquement un procédé de fabrication de l'une des cartes à puce CD1 décrites ci-avant, selon au moins un mode de réalisation particulier. Au cours d'une étape S2 de fourniture, on forme (ou fournit) un corps de carte 6 comprenant une couche métallique 8 comme précédemment décrite. En particulier, ce corps de carte 6 est formé au moins en partie par une couche métallique 8, cette couche métallique 8 comprenant une zone d'évidement 14.

On considère que la couche métallique 8 est constituée par une première région R1 et une deuxième région R2 entièrement délimitées par une droite LIM parallèle à un petit côté de la carte CD1, la première région R1 contenant entièrement la zone d'évidement 14, sa surface étant plus petite que celle de la deuxième région R2.

La couche métallique comporte une première fente F1 qui connecte la zone d'évidement à un bord périphérique 8a de la couche métallique et une deuxième fente F2 débouchant soit sur un bord périphérique de la couche métallique soit dans la zone d'évidement 14, la deuxième fente F2 se terminant par une partie fermée la deuxième région R2.

Au cours d'une étape S4 de formation, une première antenne RF ANT1 est formée (ou assemblée) sur ou dans le corps de carte 6 dans ou en regard de la zone d'évidement 14 de la couche métallique 8, comme déjà décrit.

Au cours d'une étape S6 d'assemblage, une puce RF 4 est assemblée avec le corps de carte 6 de sorte que la puce RF 4 est connectée électriquement à la première antenne RF, comme précédemment décrit.

Dans un mode de réalisation, on forme une couche isolante (solder mask) destinées à isoler la première antenne ANT1 des deuxième et troisième antennes ANT2, ANT3 formées a cours des étapes S8 et S10.Au cours d'une étape S8 de formation, une deuxième antenne RF ANT2 est formée (ou assemblée) sur ou dans le corps de carte 6 de sorte que la deuxième antenne RF ANT2 est isolée électriquement de la couche métallique 8 et de la première antenne RF ANT1, comme déjà décrit. En particulier, l'étape S8 de formation est réalisée de sorte que la deuxième antenne RF est destinée à permettre un couplage avec la première antenne, la deuxième antenne comportant au moins une spire située en regard de la première fente F1. La deuxième antenne ANT2 est par exemple formée dans une gaine isolante pour l'isoler de la troisième antenne ANT3 formée à l'étape S10.

Au cours d'une étape S10 de formation, une troisième antenne RF ANT3 est formée (ou assemblée) sur ou dans le corps de carte 6 de sorte que la troisième antenne RF ANT2 est isolée électriquement de la couche métallique 8, de la première antenne RF ANT1 et de la deuxième antenne RF ANT2, comme déjà décrit. La troisième antenne ANT3 est par exemple formée dans une gaine isolante pour l'isoler de la deuxième antenne ANT2.

En particulier, l'étape S10 de formation est réalisée de sorte que la troisième antenne RF est destinée à permettre un couplage avec la première antenne, la troisième antenne comportant au moins une spire située en regard de la deuxième fente F2.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant, afin de répondre à un besoin bien particulier conformément aux revendications présentées ci-après.

Dans un mode de réalisation, la couche métallique 8 est au moins partiellement recouverte par un revêtement plus conducteur que la couche métallique. Préférentiellement, elle est entièrement recouverte par ce revêtement conducteur mais lorsqu'on utilise un revêtement, celui-ci est au mois présent dans la zone de circulation des boucles principales des courants de Foucault.

Le revêtement a par exemple une conductivité supérieure à 3,5×10⁷ S/m. Il peut par exemple être en cuivre, en argent ou en or.

## Revendications

1. Carte à puce comprenant :
- un corps de carte rectangulaire formé au moins en partie par une couche métallique (8) comprenant une zone d'évidement ;
- une puce RF ;
- une première antenne RF disposée dans ou en regard de la zone d'évidement et connectée électriquement à la puce RF ;
ladite couche métallique étant constituée par une première région et une deuxième région délimitées par une droite (LIM) parallèle à un petit côté de la carte, la première région contenant la zone d'évidement (14),
- une première fente (F1) connectant la zone d'évidement à un bord périphérique de la première région (R1);
- une deuxième fente (F2) débouchant soit sur un bord périphérique de la couche métallique (8) soit dans la zone d'évidement, la deuxième fente se terminant par une partie fermée dans la deuxième région; e
- une deuxième antenne RF (ANT2) isolée électriquement de la couche métallique et de la première antenne RF et configurée pour permettre un couplage avec la première antenne, la deuxième antenne comportant au moins une spire située en regard de la première fente (F1),
- une troisième antenne RF (ANT3) isolée électriquement de la couche métallique, de la première antenne RF, et de la deuxième antenne RF et configurée pour permettre un couplage avec la première antenne, la troisième antenne (ANT3) comportant au moins spire située en regard de ladite deuxième fente (F2).

2. Carte à puce selon la revendication 1,
dans laquelle la deuxième antenne RF (ANT2) comprend :
- une première partie d'antenne (ANT2a) s'étendant en regard d'une zone périphérique de la couche métallique (8), au moins une spire de ladite première partie d'antenne (ANT2a) s'étendant en regard de la première fente (F1);
- une deuxième partie d'antenne (ANT2b), connectée électriquement à la première partie d'antenne (ANT2a), et s'étendant en regard de la zone d'évidement (14) pour permettre un couplage avec la première antenne (ANT1) ;
la première partie d'antenne (AT2a) étant configurée pour collecter un courant image (I2a) induit par des premiers courants de Foucault (a) circulant sur un bord dans la couche métallique (8) lorsque la carte à puce est soumise à un champ électromagnétique dans des conditions opérationnelles de la carte à puce (CD1); dans laquelle la troisième antenne RF (ANT3) comprend :
- une première partie d'antenne (ANT3a) agencée au moins en partie en regard de la deuxième région (R2) de la couche métallique (8), au moins une spire de ladite première partie d'antenne (ANT3a) s'étendant en regard de la deuxième fente (F2),
- une deuxième partie d'antenne (ANT3b), connectée électriquement à la première partie d'antenne (ANT3a), et s'étendant en regard de la zone d'évidement (14) pour permettre un couplage avec la première antenne (ANT1) ;
(ii) la première partie de la troisième antenne (ANT3a) étant configurée pour collecter un courant image (I2a) induit par des courants de Foucault (a) circulant dans la deuxième région (R2) de la couche métallique (8) lorsque la carte à puce est soumise à un champ électromagnétique dans des conditions opérationnelles dites défavorables correspondant à une partie seulement desdites conditions opérationnelles,
- un acheminement des deuxième et troisième antennes étant configuré de manière à ce que le flux de courant circule dans la même direction dans :
- la première partie de la deuxième antenne ;
- - la deuxième partie de la deuxième antenne ;
- la première partie de la troisième antenne ; et dans
- la deuxième partie de la troisième antenne.

3. Carte à puce selon la revendication 2, dans laquelle les deuxièmes conditions opérationnelles défavorables sont des conditions dans lesquelles la carte est décentrée par rapport à une antenne d'un dispositif générant ledit champ électromagnétique.

4. Carte à puce selon l'une quelconque des revendications 1 à 3, dans laquelle ladite deuxième région (R2) comporte une zone (ZC) privilégiée d'exploitation des courants de Foucault, ladite deuxième antenne (ANT2) étant située en vis-à-vis de la deuxième fente (F2) au niveau de ladite zone (ZC) privilégiée.

5. Carte à puce selon la revendication 4, **caractérisée en ce que** ladite zone privilégiée (ZC) d'exploitation des courants de Foucault est une zone de la surface de la carte qui est soumise à un champ magnétique uniforme d'intensité maximale quelles que soient les conditions opérationnelles de la carte.

6. Carte à puce selon les revendications 4 ou 5, **caractérisée en ce que** ladite zone privilégiée (ZC) d'exploitation des courants de Foucault est un disque centré sur ladite carte et dont le rayon correspond au rayon d'un volume opérationnel de ladite carte.

7. Carte à puce selon l'une quelconque des revendications 6, **caractérisée en ce que** la carte à puce est au conforme à la norme EMVCo, ladite zone privilégiée (ZC) d'exploitation des courants de Foucault étant un disque de 25 mm de rayon centré sur ladite carte.

8. Carte à puce selon l'une quelconque des revendications 1 à 7 **caractérisée en ce que** la couche métallique (8) est au moins partiellement recouverte par un revêtement (70) plus conducteur que la couche métallique.

9. Carte à puce selon la revendication 8 **caractérisée en ce que** la couche métallique (8) est entièrement recouverte par ledit revêtement.

10. Carte à puce selon la revendication 8 ou 9, **caractérisée en ce que** l'épaisseur du revêtement est supérieure à l'épaisseur de peau dudit revêtement.

11. Carte à puce selon l'une quelconque des revendications 8 à 10, **caractérisée en ce que** la conductivité dudit revêtement (70) est supérieure à 3,5x10' S/m.

12. Carte à puce selon l'une quelconque des revendications 8 à 11, **caractérisée en ce que** ledit revêtement (70) est en cuivre, en argent ou en or.

13. Procédé de fabrication d'une carte à puce (CD1) de forme générale rectangulaire à partir d'un corps de carte (6) formé au moins en partie par une couche métallique (8), ladite couche métallique comprenant une zone d'évidement (14), ladite couche métallique (8) étant constituée par une première région (R1) et une deuxième région (R2) entièrement délimitées par une droite (LIM) parallèle à un petit côté de la carte (CD1), la première région (R1) contenant entièrement la zone d'évidement (14) et sa surface étant plus petite que celle de la deuxième région (R2), une première fente (F1) de la couche métallique connectant la zone d'évidement (14) à un bord périphérique (8a) de la première région (R1) et une deuxième fente (F2) de la couche métallique débouchant soit sur un bord périphérique de la couche métallique (8) soit dans la zone d'évidement (14), la deuxième fente (F2) se terminant par une partie fermée dans la deuxième région (R2), le procédé comprenant :
- formation sur ou dans le corps de carte d'une première antenne RF (AT1) dans ou en regard de la zone d'évidement de la couche métallique ;
- assemblage d'une puce RF (4) avec le corps de carte de sorte que la puce RF (4) est connectée électriquement à la première antenne RF ;
- formation sur ou dans le corps de carte d'une deuxième antenne RF (AT2) de sorte que la deuxième antenne RF est isolée électriquement de la couche métallique et de la première antenne RF, la deuxième antenne étant configurée pour permettre un couplage avec la première antenne, la deuxième antenne comportant au moins une spire située en regard de la première fente ; et
- formation sur ou dans le corps de carte d'une troisième antenne RF (ANT3) de sorte que la troisième antenne RF est isolée électriquement de la couche métallique, de la première antenne RF et de la deuxième antenne RF, la troisième antenne étant configurée pour permettre un couplage avec la première antenne, la troisième antenne comportant au moins une spire située en regard de la deuxième fente.
